# EUROPÄISCHE PATENTSCHRIFT

(11) **EP 3 822 008 B1**
(45) Veröffentlichungstag und Bekanntmachung des Hinweises auf die Patenterteilung: **11.05.2022**
(21) Anmeldenummer: 20206497.8
(22) Anmeldetag: 09.11.2020
(51) Int. Cl.: B23B 29/034, B23B 29/03

(54) **SPINDELBAUGRUPPE FÜR EINE WERKZEUGMASCHINE**
SPINDLE ASSEMBLY FOR A MACHINE TOOL
ENSEMBLE BROCHE POUR UNE MACHINE OUTIL

(30) Priorität: 04.11.2020 DE 102020128993; 11.11.2019 DE 102019130365
(43) Veröffentlichungstag der Anmeldung: 19.05.2021
(73) Patentinhaber: Starrag GmbH, 09117 Chemnitz (DE)
(72) Erfinder: Göbel, Beate, 09557 Flöha (DE); Haubold, Uwe, 09212 Limbach-Oberfrohna (DE)
(74) Vertreter: Rumrich, Gabriele

(56) Entgegenhaltungen:
- EP-A1- 0 022 569
- EP-B1- 1 360 024
- EP-B1- 2 754 517
- WO-A1-99/46074
- WO-A1-2007/013107
- WO-A2-02/064294
- DE-A1-102017 105 934
- DE-U1- 9 107 759
- GB-A- 2 164 278
- JP-A- S5 919 616
- US-A1- 2002 025 233

## Beschreibung

Die Erfindung betrifft eine Spindelbaugruppe für eine Werkzeugmaschine nach dem Oberbegriff des ersten Patentanspruchs und findet insbesondere für die radiale Verstellung eines in der Spindelbaugruppe aufgenommenen Aussteuerwerkzeuges Anwendung.

Das Herstellen von Formen wie z.B. Innendrehen und automatische Korrektur von Werkzeugverschleiß bedingt eine Sonderkonstruktion der Spindel und der Werkzeugaufnahme, in Verbindung mit verstellbaren Werkzeugen in einem Bearbeitungszentrum.

Ziel beim Betrieb von Werkzeugmaschinen bzw. Bearbeitungszentren ist die Erhöhung der Effizienz und Effektivität bei gleichbleibender Genauigkeit. Oft sind Sonderlösungen mit Kompromissen verbunden, die auf Kosten einer dieser drei Faktoren geht. Das gilt es zu vermeiden. Besondere Anforderungen in dieser Richtung stellen die Forderung nach Bearbeiten ohne Umspannen und Drehbearbeitung auf einem Bearbeitungszentrum. Zur Lösung dieser Probleme werden aussteuerbare Werkzeuge eingesetzt, deren Schneidenposition sich während des Bearbeitungsprozesses verändern lassen. Zur Erzeugung einer Aussteuerbewegung sind grundsätzlich drei Lösungsansätze vorhanden, nämlich eine Axialbewegung durch die Spindel, eine Differenzdrehzahl einer zweiten Achse im Verhältnis zur Spindel und eine Kombination aus beiden Lösungen.

Aus den Druckschriften EP1360024 B1 und US6974285 A1 sind Werkzeugköpfe mit einem Maschinenschaft und einem Werkzeugschaft bekannt, die eine gemeinsame Mittelachse aufweisen, wobei der Werkzeugschaft einen steifen Kern und einen von einer relativ dazu elastisch auslenkbaren Parallelfeder-Anordnung getragenen Kopf mit Werkzeug aufweist. An dem Kopf sind mehrere von diesem ausgehende, die Parallelfeder-Anordnung bildenden Schenkel angeordnet, von denen mindestens einer am Kern oder Maschinenschaft befestigt ist, und eine Vorrichtung zur radialen Verstellung des Kopfes relativ zum Kern, umfassend eine im Kern geführte Stelleinrichtung mit Kegelteil, der an einem Kontaktteil der Parallelfeder-Anordnung im Einsatzfall unter Vorspannung anliegt, wobei der Kern mit der Parallelfeder-Anordnung einstückig ausgebildet ist.

Aus der Druckschrift DE 3433793 A1 ist ein umlaufender Bohrkopf mit Bohrspindel und einem quer zur Rotationsachse fein einstellbarem Werkzeugträger sowie mit einem in der Bohrspindel höhenverstellbar geführten, den Werkzeugträger, quer zur Rotationsachse verschiebenden Keilträger und einem mit der Schräge des Keils des Keilträgers zusammenwirkenden Gleitkörper bekannt, wobei der Schwerpunkt des Werkzeugträgers so gegenüber der Rotationsachse versetzt angeordnet ist, dass die bei Rotation des Bohrkopfes auftretenden Fliehkräfte den Werkzeugträger gegen den Gleitkörper pressen. In der Druckschrift DE9107759 U1 wird ein Werkzeugkopf, insbesondere in Form eines Feinbohrkopfes offenbart, der einen Grundkörper und einen von einer relativ zum Grundkörper elastisch auslenkbaren Parallelfeder-Anordnung getragenen Kopfteil aufweist. Weiterhin ist eine Vorrichtung zur radialen Verstellung des Kopfteiles relativ zum Grundkörper vorgesehen, die im Inneren des Grundkörpers einen schwenkbar gelagerten Hebel und eine mittels Verstellantrieb in einer Führung im Grundkörper axial bewegbare Hülse mit einer inneren Kegelfläche aufweist, wobei ein Ende des Hebels an der inneren Kegelfläche der Hülse anliegt und das andere Ende des Hebels mit dem Kopfteil in kraftübertragender Verbindung steht. Die Hülse ist zur Ausführung einer translatorischen Verstellbewegung im Wesentlichen undrehbar und ist in allen Einstellpositionen elastisch im Sinne einer Vorspannung belastet.

Aus EP1070563 A1 ist ein Werkzeughalter bekannt, der an einem Ende an einem Schaft befestigt ist und an dem anderen Ende ein Gehäuse aufweist. Ein Drehkraftumwandlungsmechanismus ist in der Lage, die Position des Werkzeugs in radialer Richtung durch die Umwandlung der Drehkraft in eine lineare Bewegung in nur eine Richtung zu wandeln.

Die vorgenannten Lösungen weisen einen komplizierten konstruktiven Aufbau auf und gewährleisten keine sehr steife konstruktive Ausbildung für die Auslenkung des Bearbeitungswerkzeuges, wodurch es zu unerwünschten Schwingungen und Unwuchten kommen kann, die das Bearbeitungsergebnis negativ beeinflussen.

Aus der Druckschrift DE 10 2017 105 934 ist eine Spindelbaugruppe gemäß dem Oberbegriff des Anspruchs 1 bekannt, bei welcher mit einem Planzuggetriebe eine Winkelverdrehung zwischen der Spindel und einer Planzugwelle erzeugt wird.

Die Maschinenspindel ist dazu eingerichtet, das Werkzeug zu drehen und die Schneide radial zu verstellen. Soll nun während des Betriebs eine Radialverstellung der Schneide vorgenommen werden, wird zunächst die Kupplungseinrichtung entkuppelt.

Eine Winkelverstellung der drehenden Spindel und der drehenden Planzugwelle gegeneinander findet jedoch nicht statt, solange der Planetenträger eines Planetengetriebes nicht dreht. Das Sonnenrad treibt über die Planetenräder das Hohlrad, das in Gegenrichtung umläuft. Das in gleiche Richtung mitgenommene Hohlrad treibt nun über die Planetenräder das Sonnenrad an. Sobald jedoch der Stellmotor den Planetenträger in Drehrichtung verstellt, wird diese Winkelstellbewegung der Drehbewegung der Planzugwelle überlagert, so dass diese mit gegenüber der Spindel etwas veränderter Drehzahl weiterdrehend eine Winkelverstellung gegen die Spindel erfährt. Die Winkelverstellung kommt zum Stillstand, sobald der Stellmotor stillgesetzt wird, die Drehzahlen von Spindel und Planzugwelle sind dann wieder gleich. Durch die von dem Stellmotor über das Winkelstellgetriebe auf die Planzugwelle zusätzlich zur vorhandenen Drehung ausgeübte Verdrehung, d.h. Winkelverstellung, wird die Schneide in Radialrichtung verstellt. Diese Lösung gestaltet sich konstruktiv aufwendig. Weiter ist für den Einsatz in einem flexiblen Bearbeitungszentrum nachteilig, dass die verwendete Wechselspindel nur für einen Zweck einsetzbar ist. Mithin wird das normalerweise flexible Bearbeitungszentrum im Funktionsumfang deutlich reduziert.

Der für die Erzeugung einer Differenzdrehzahl erforderliche Antrieb wirkt permanent, was letztlich einem Bearbeitungszentrum mit einer Sonderlösung entspricht.

Aus der Druckschrift EP 2 754 517 B1 ist ein Bearbeitungswerkzeug für eine mehrspindlige Werkzeugmaschine, mit mindestens einem Aussteuerkopf, der einen Innen- und einen Außenrotor und ein radial hervorstehendes Schneidelement zur drehend spanenden Werkstückbearbeitung aufweist, und mit einem Getriebe, durch das der eine, erste Spindelanschluss mit dem Innenrotor und der andere, zweite Spindelanschluss mit dem Außenrotor drehgekoppelt ist, wobei der Aussteuerkopf einen Aussteuermechanismus aufweist, der das Schneidelement bei unterschiedlicher Drehzahl der Innen- und Außenrotoren radial aussteuert und bei gleicher Drehzahl nicht radial aussteuert. Somit kann das Schneidelement des mindestens einen Aussteuerkopfs alleine über die Beeinflussung der Drehzahlen des Innen- bzw. Außenrotors des Aussteuerkopfes zugestellt (ausgesteuert) werden, ohne dass dafür die lineare Bewegung einer Zugstange erforderlich ist. Beispielsweise kann durch das im Vergleich zum Außenrotor schnellere Drehen des Innenrotors das Schneidelement zunehmend radial nach außen oder durch das entsprechend langsamere Drehen radial nach innen verfahren werden. So können in den zu bearbeitenden Werkstücken zum Beispiel Innenkonturen mit variablen Durchmessern realisiert werden. Dabei weist das Bearbeitungswerkzeug mindestens zwei parallel beabstandete Spindelanschlüsse zur Drehkopplung mit zwei parallel beabstandeten Arbeitsspindeln der Werkzeugmaschine aufweist. Das Bearbeitungswerkzeug umfasst ferner ein Getriebe, durch das der erste Spindelanschluss mit einem inneren Rotor und der zweite Spindelanschluss mit einem äußeren Rotor drehgekoppelt ist. Die Drehkopplung zwischen dem ersten Spindelanschluss und dem inneren Rotor erfolgt über einen ersten Zahnriemen, der mit einem am ersten Spindelanschluss abtriebsseitig angeordneten Zahnrad und einem am inneren Rotor angeordneten Zahnrad zusammenwirkt. Die Drehkopplung erfolgt über Zahnriemen.

Diese Lösung weist einen relativ komplizierten konstruktiven Aufbau auf und baut hinsichtlich ihres Umfangs durch die verwendeten Zahnriemen relativ groß. Weiterhin ist diese konstruktive Ausführung nur für Einzweckmaschinen geeignet, bei denen ausschließlich Aussteuerwerkzeuge eingesetzt werden.

Aufgabe der Erfindung ist es, eine Spindelbaugruppe für eine Werkzeugmaschine zu entwickeln, welche eine radiale Verstellung eines in der Maschinenspindel aufgenommenen Werkzeuges während der Bearbeitung gestattet und dabei einen einfachen konstruktiven und steifen Aufbau aufweist und die bedarfsweise eine einfache Nachrüstung von Werkzeugmaschinen, bei welchen der Einsatz von Aussteuerwerkzeugen nicht möglich ist, gewährleistet, so dass auch bei derartigen Werkzeugmaschinen durch Nachrüstung mit der erfindungsgemäßen Lösung Aussteuerwerkzeuge einsetzbar sind.

Diese Aufgabe wird mit den Merkmalen des ersten Patentanspruchs gelöst.

Vorteilhafte Ausgestaltungen ergeben sich aus den Unteransprüchen.

Die Spindelbaugruppe für eine Werkzeugmaschine weist eine Werkzeugmaschinenspindel auf, die mittels eines ersten Drehantriebes in Rotation versetzbar ist und in welcher eine innenliegende relativ zur Werkzeugmaschinenspindel drehbar gelagerte Welle angeordnet ist, wobei die Spindelbaugruppe erfindungsgemäß mit einer Kupplungsbaugruppe kombiniert ist, die ein axial verschiebbar angeordnetes erstes Zahnrad und einen zweiten Drehantrieb aufweist, wobei das erste Zahnrad in einer ersten Endlage die Werkzeugmaschinenspindel mit der Welle koppelt derart, dass die Werkzeugmaschinenspindel und die Welle mit der gleichen Drehzahl rotieren und wobei das erste Zahnrad in einer zweiten Endlage die Welle mit dem zweiten Drehantrieb koppelt, wobei durch den zweiten Drehantrieb auf die Welle eine Drehzahl übertragbar ist, die unterschiedlich ist zur Drehzahl der Werkzeugmaschinenspindel, so dass durch eine Differenzdrehzahl zwischen der Werkzeugmaschinenspindel und der in dieser drehbar gelagerten Welle ein in der Spindelbaugruppe aufgenommenes aussteuerbares Werkzeug radial stellbar ist.

Zwischen Werkzeugmaschinenspindel und Welle ist dabei ein Aussteuerkopf für ein Aussteuerwerkzeug vorhanden ist, Das erste Zahnrad greift dabei in der ersten Endlage in ein mit der Werkzeugmaschinenspindel drehfest verbundenes zweites Zahnrad und in ein mit der Welle drehfest verbundenes drittes Zahnrad, wodurch die Werkzeugmaschinenspindel und die Drehwelle drehfest miteinander gekoppelt sind und die gleiche Drehzahl aufweisen. In der zweiten Endlage steht das erste Zahnrad mit dem dritten Zahnrad und einem ausgangsseitigen vierten Zahnrad des zweiten Drehmotors in Wirkverbindung, wodurch die Welle nun mit dem zweiten Drehmotor gekoppelt ist. Dadurch ist mit dem zweiten Drehmotor eine zur Drehzahl der Werkzeugmaschinenspindel abweichende Drehzahl auf die Welle übertragbar. Der zweite Drehmotor ist bevorzugt als Hohlwellenmotor ausgebildet. Durch die Differenzdrehzahl zwischen der Werkzeugmaschinenspindel und in dieser und relativ zu dieser drehbar gelagerten Welle ist dann ein aussteuerbares Werkzeug radial stellbar.

Die Werkzeugmaschinenspindel weist dabei eine innenliegende drehbar gelagerter Welle auf, die vorzugsweise auch als Kühlmittelrohr ausgeführt ist.

Der Eingriff des ersten Zahnrades erfolgt somit durch dessen axiale Verstellung
- in der ersten Endlage des ersten Zahnrades in das zweite Zahnrad der Werkzeugmaschinenspindel und das dritte Zahnrad der Welle, wodurch die Werkzeugmaschinenspindel und die Welle (das Kühlmittelrohr) miteinander gekoppelt sind und daher die Werkzeugmaschinenspindel und die darin gelagerte Welle (das Kühlmittelrohr) die gleiche Drehzahl aufweisen und ein nicht aussteuerbares Werkzeug eingesetzt werden kann,
- in der zweiten axialen Endlage des ersten Zahnrades in das dritte Zahnrad der Welle und das ausgangsseitige vierte Zahnrad des Hohlwellenmotors über das erste Zahnrad miteinander gekoppelt sind, wodurch über den Hohlwellenmotor auf die Welle (das Kühlmittelrohr) eine von der Drehzahl der Werkzeugmaschinenspindel abweichende Drehzahl übertragbar ist und ein aussteuerbares Werkzeug einsetzbar ist.

Für die Realisierung der axialen Stellbewegung des ersten Zahnrades ist eine Betätigungseinrichtung zur axialen Verschiebung vorgesehen. Diese kann beispielsweise ein Pneumatik- oder Hydraulikzylinder sein oder auch ein elektrischer Antrieb.

Wird das axial verschiebbare erste Zahnrad durch die Betätigungseinrichtung außer Eingriff mit dem zweiten Zahnrad gebracht und in die zweite Endlage geschoben, kommt dieses in Eingriff mit dem vierten Zahnrad des Drehantriebes. Sowohl in der ersten als auch in der zweiten Endlage befindet sich das erste Zahnrad in Eingriff mit dem dritten Zahnrad der Welle, so dass diese in der ersten Endlage mit der Werkzeugmaschinenspindel und in der zweiten Endlage mit dem Drehantrieb gekoppelt ist.

In der zweiten Endlage werden an das Werkzeug zwei Drehzahlen übergeben, zum einen die Drehzahl der Werkzeugmaschinenspindel und zum anderen die davon abweichende Drehzahl der Welle. Mittels dieser Differenzdrehzahl wird dann ein aussteuerbares Werkzeug betätigt.

Der Hauptvorteil dieser erfindungsgemäßen Lösung besteht darin, dass eine für diesen Einsatz vorbereitete Spindel alle Bearbeitungsprozesse eines Bearbeitungszentrums ausführen und zusätzlich Aussteuerwerkzeuge verwenden kann. Die Funktion ist auch nachrüstbar, so dass ein Kunde dies auch im Nachgang ordern kann.

Das Ein- und Ausschalten der Aussteuerfunktion wird vorzugsweise im Stillstand der Spindel vorgenommen. Grundsätzlich ist es aber auch möglich, Spindelantrieb und Verstellantrieb zu synchronisieren und die Verstellung während der Rotation von Werkzeugmaschinenspindel und Welle (Kühlmittelrohr) vorzunehmen.

Die Erfindung wird nachfolgend an einem Ausführungsbeispiel und zugehörigen Zeichnungen näher erläutert.

Es zeigen:
- Figur 1: eine dreidimensionale Darstellung der Spindelbaugruppe S,
- Figur 2: einen Längsschnitt durch die Spindelbaugruppe nach Figur 1,
- Figur 3: einen dreidimensionalen Schnitt durch die Spindel im Bereich Kupplungsbaugruppe in der zweiten Endlage des ersten Zahnrades,
- Figur 4: einen Längsschnitt gemäß Figur 3 durch die Kupplungsbaugruppe in der zweiten Endlage des ersten Zahnrades,
- Figur 5: einen Längsschnitt durch die Kupplungsbaugruppe in der ersten Endlage des ersten Zahnrades,
- Figur 6: eine Prinzipdarstellung der Kupplungsbaugruppe in der zweiten Endlage mit der Darstellung des Kraftflusses,
- Figur 7: eine Prinzipdarstellung der Kupplungsbaugruppe in der ersten Endlage mit der Darstellung des Kraftflusses.

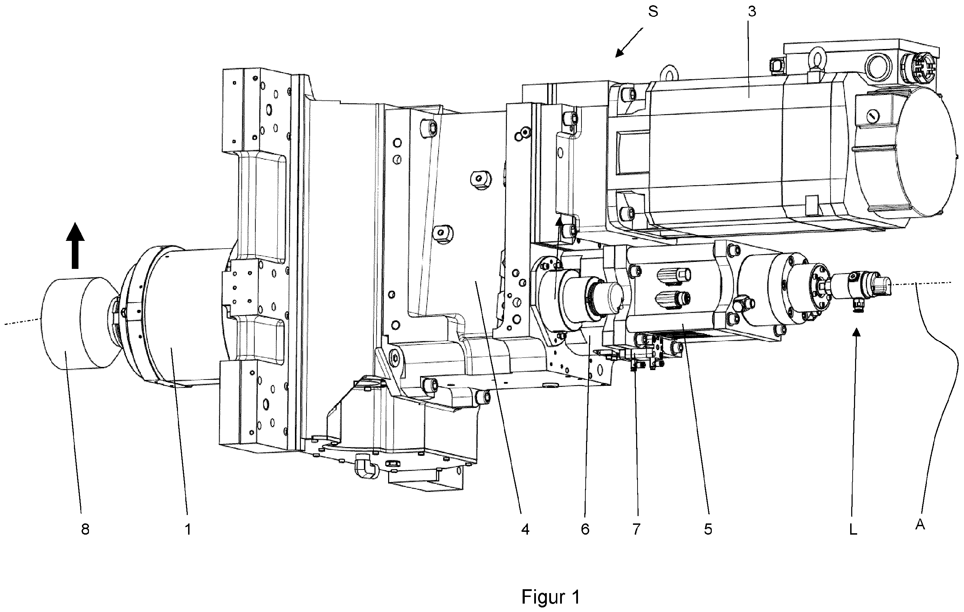

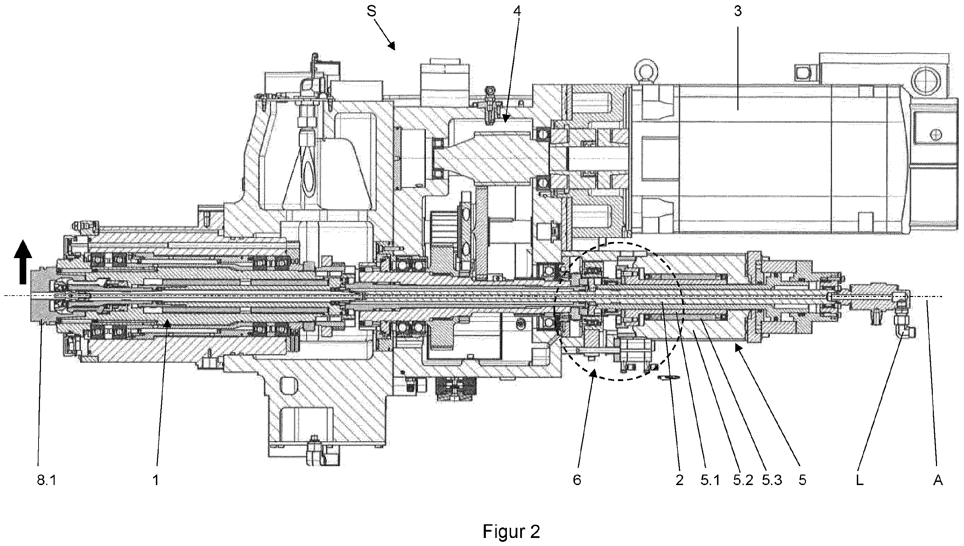

Figur 1 zeigt die komplette Spindelbaugruppe S für eine Werkzeugmaschine und Figur 2 einen Längsschnitt, wobei die Spindelbaugruppe S bekannter Weise eine Werkzeugmaschinenspindel 1 mit einer Längsachse A aufweist. Innerhalb der Werkzeugmaschinenspindel 1 ist eine drehbar gelagerte Welle angeordnet, die hier als Hohlwelle 2 ausgebildet ist sowie als Kühlmittelrohr dient und dafür eine zentrische Durchströmöffnung 2.1 für das nicht bezeichnete Kühlmedium aufweist, welches der Hohlwelle 2 über einen Kühlmittelanschluss L zugeführt wird.

Der Drehantrieb der Werkzeugmaschinenspindel 1 um die Längsachse A wird über einen Antriebsmotor 3 und ein Hauptgetriebe 4 realisiert. Der zweite Drehantrieb 5 der Drehwelle (Hohlwelle 2) (siehe Figur 2) ist als Hohlwellenmotor 5 ausgebildet, und kommt zum Einsatz, wenn eine Drehzahldifferenz zwischen Werkzeugmaschinenspindel 1 und Welle 2 realisiert werden soll.

Ausgangsseitig ist an der Werkzeugmaschinenspindel 1 ein Aussteuerkopf 8 bzw. ein Aussteuerwerkzeug angeordnet, was aus Figur 1 ersichtlich ist. Dieser Aussteuerkopf 8 bzw. das Aussteuerwerkzeug ist bei einer Drehzahldifferenz zwischen Werkzeugmaschinenspindel 1 und Hohlwelle 2 radial verstellbar, was durch den dicken Pfeil angedeutet ist. Derartige Aussteuerköpfe bzw. Aussteuerwerkzeuge, die durch eine Drehzahldifferenz ausgelenkt werden, sind Stand der Technik.

Aus Figur 2 ist ersichtlich, dass die Werkzeugmaschinenspindel 1 und die als Kühlmittelrohr ausgeführte Hohlwelle 2 zueinander fluchtende Längsachsen A aufweisen.

Der Hohlwellenmotor 5 weist einen Rotor 5.1, einen Stator 5.2 und eine dazwischen angeordnete Lagerung 5.3 auf.

Zwischen der Werkzeugmaschinenspindel 1 und der Hohlwelle 2 ist eine Kupplungsbaugruppe 6 angeordnet, mit welcher die Hohlwelle 2 mit der Werkzeugmaschinenspindel 1 so gekoppelt werden kann, dass diese mit gleicher Drehzahl drehen und keine Aussteuerbewegung des Werkzeuges realisiert wird. Daher kann in diesem Fall auch ein herkömmliches Werkzeug verwendet werden. Wird durch die Kupplungsbaugruppe 6 die Hohlwelle 2 von der Werkzeugmaschinenspindel 1 entkoppelt, wird der Drehantrieb der Hohlwelle 2 mittels des Rotors 5.1 des Hohlwellenmotors 5 realisiert, so dass die Hohlwelle 2 und die Werkzeugmaschinenspindel 1 eine Drehzahldifferenz aufweisen, durch welche in Bezug auf die Längsachse A die radiale Aussteuerbewegung des Aussteuerwerkzeuges 8 realisiert wird.

In Abhängigkeit von der Konstruktion des Aussteuerwerkzeuges 8 erfolgt die Verstellung der Schneiden nach außen oder innen gegenüber der Längsachse A entweder durch Erhöhung oder Verminderung der Drehzahl der Hohlwelle 2 gegenüber der Drehzahl der Werkzeugmaschinenspindel 1.

Aus Figur 2 ist ersichtlich, dass die Aufnahme/ Spanneinrichtung 8.1 für den hier nicht dargestellten Aussteuerkopf bzw. das Aussteuerwerkzeug sowohl mit der Werkzeugmaschinenspindel 1 als auch der Hohlwelle 2 in Wirkverbindung steht, wodurch bei Drehzahldifferenz zwischen diesen die erforderliche Aussteuerbewegung auf das Aussteuerwerkzeug bzw. den Aussteuerkopf 8 (Figur 1) übertragen wird.

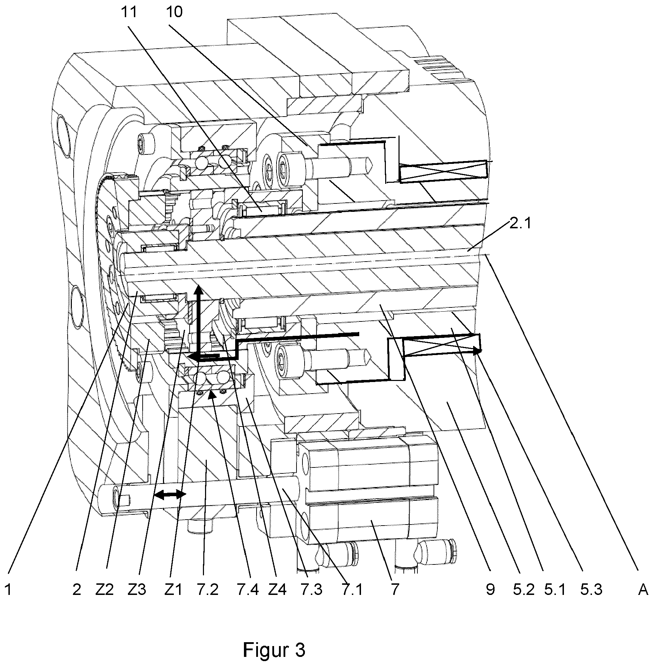

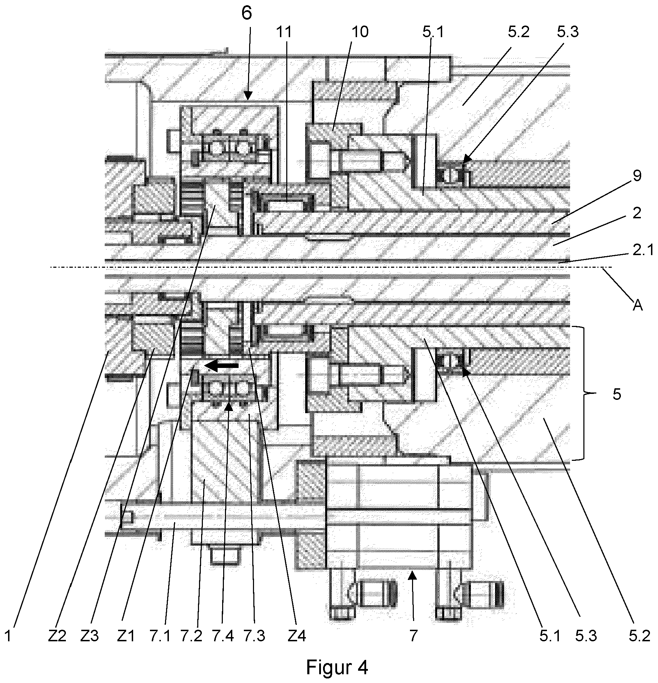

Der Längsschnitt durch den vergrößert dargestellten Bereich der Kupplungsbaugruppe 6 der Spindelbaugruppe S wird in den Figuren 3 und 4 im Bereich der Zahnräder Z1 bis Z4 in der zweiten Endlage des ersten Zahnrades Z1 dargestellt.

Die axiale Verstellung des ersten Zahnrades Z1 wird parallel zur Längsachse A mittels eines Linearantriebes, hier mittels eines Pneumatikzylinders 7 realisiert. Alternativ kann auch ein Hydraulikzylinder oder ein axial verstellbarer Linearmotor vorgesehen werden. Entlang der Längsachse A ist an der Werkzeugmaschinenspindel 1 ein Aussteuerkopf 8 bzw. ein Aussteuerwerkzeug angeordnet, wie in Figur 1 dargestellt.

Mit der Werkzeugmaschinenspindel 1 ist drehfest ein zweites Zahnrad Z2 verbunden und mit der Hohlwelle 2 ein drittes Zahnrad Z3. Der Hohlwellenmotor 5 weist ausgangsseitig ein viertes Zahnrad Z4 auf.

Zur Realisierung einer Drehzahldifferenz zwischen Werkzeugmaschinenspindel 1 und Hohlwelle 2 befindet sich das erste Zahnrad Z1 in seiner zweiten Endlage, was in den Figuren 2 und 3 dargestellt ist.

Mittels des Linearantriebs 7 wurde dazu das erste Zahnrad Z1 in Richtung zum Hohlwellenmotor 5 bewegt und dadurch mit dem zweiten Zahnrad Z2 außer Eingriff gebracht und in Eingriff gebracht mit dem dritten Zahnrad Z3, welches mit der Hohlwelle 2 drehfest verbunden ist, und mit dem vierten Zahnrad Z4, welches ausgangsseitig am Hohlwellenmotor 5 angeordnet ist, in Eingriff gebracht. Auf die Hohlwelle 2, die als Kühlmittelrohr ausgebildet ist, wird nun über den Rotor 5.1 des Hohlwellenmotors 5 eine andere Drehzahl übertragen als auf die Werkzeugmaschinenspindel 1. In dieser zweiten Endlage ist dadurch ein entsprechendes aussteuerbares Werkzeug durch die Differenzdrehzahl zwischen der Werkzeugmaschinenspindel 1 und der in dieser drehbar gelagerten Hohlwelle 2 radial stellbar, wenn ein aussteuerbares Werkzeug Anwendung findet.

Zwischen dem Innendurchmesser des Rotors 5.1 des Hohlwellenmotors 5 ist eine Hülse 9 in Form einer Stößelhülse drehfest angeordnet, die jedoch keine Funktion in Bezug auf die Übertragung der Drehzahl vom Rotor 5.1 des Hohlwellenmotors 5 auf das vierte Zahnrad Z4 hat. Da diese Hülse 9 drehfest ist, wurde zwischen Hülse 9 und dem vierten Zahnrad Z4 ein Wälzlager 11 vorgesehen.

Die Kraftübertragung in der dargestellten Position zur Erzeugung einer Drehzahldifferenz zwischen Werkzeugspindel 1 und Kühlmittelrohr 2 wird in Figur 3 durch den dicken Pfeil verdeutlicht und erfolgt wie nachfolgend beschrieben:
- vom Rotor 5.1 des Hohlwellenmotors 5 erfolgt die Übertragung auf das vierte Zahnrad Z4 über einen Adapter 10, der mit dem Zahnrad Z4 und mit dem Rotor 5.1 verbunden ist. Die Verbindung zwischen dem Rotor 5.1 und dem Adapter 10 wird über eine nicht bezeichnete Schraubverbindung realisiert, wobei die feste Verbindung von Adapter 10 und Zahnrad Z4 in der gewählten Schnittebene nicht dargestellt ist,
- vom vierten Zahnrad Z4 erfolgt die Übertragung über das erste Zahnrad Z1 auf das dritte Zahnrad Z3,
- vom dritten Zahnrad Z3 erfolgt die Übertragung auf die Hohlwelle 2, die dadurch eine andere Drehzahl als die Werkzeugspindel 1 vollführen kann.

Beim Einsatz eines nicht aussteuerbaren Werkzeuges erfolgt mittels des Pneumatikzylinders 7 und dessen Kolbenstange 7.1 eine axiale Verschiebung des ersten Zahnrades Z1 in Richtung zum hier nicht dargestellten Werkzeug (in Pfeilrichtung).

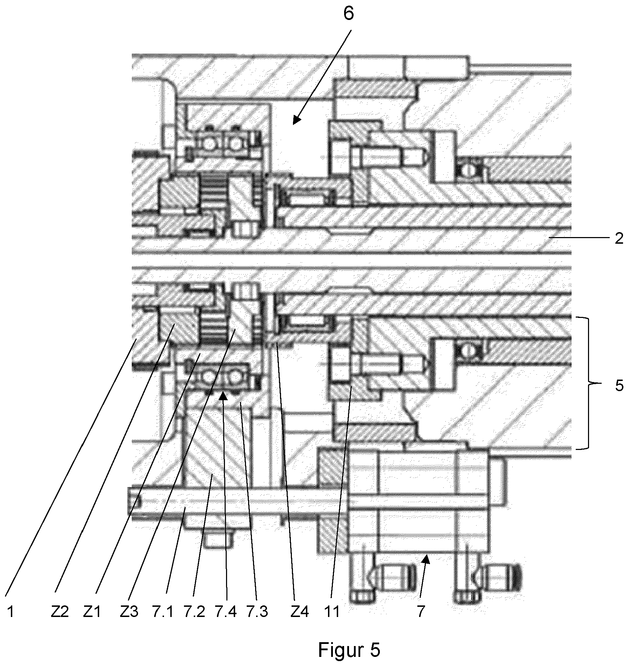

Dadurch gelangt das erste Zahnrad Z1 außer Eingriff mit dem vierten Zahnrad Z4 des Hohlwellenmotors 5 und in einer ersten Endlage in Wirkverbindung mit dem zweiten Zahnrad Z2 und dem dritten Zahnrad Z3, was aus Figur 5 ersichtlich ist. Dadurch rotieren in dieser ersten Endlage Werkzeugmaschinenspindel 1 und Welle 2 mit der gleichen Drehzahl und das in der Werkzeugspanneinrichtung (Werkzeugaufnahme) aufgenommene Werkzeug (nicht dargestellt) ist axial zentriert.

Das erste axial verschiebbare Zahnrad Z1 weist eine Innenverzahnung auf und die Zahnräder Z2, Z3, Z4 sind mit einer dazu korrespondierenden Außenverzahnung versehen.

Die axiale Verstellung des ersten Zahnrades Z1 erfolgt mit der Kolbenstange 7.1 des Pneumatikzylinders 7, die über ein Verbindungselement 7.2, einen Lagerring 7.3 und eine Kugellagerung 7.4 mit dem ersten Zahnrad Z1 wirkverbunden ist. Über die Kugellagerung 7.4 ist das erste Zahnrad Z1 drehbar gelagert.

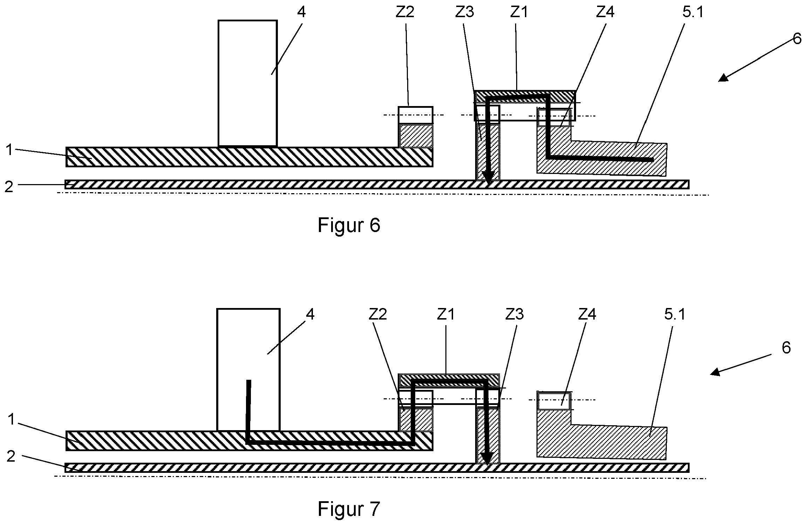

Die Prinzipdarstellungen der Kupplungsbaugruppe 6 in der zweiten Position werden nochmals in Figur 6 und in der ersten Position in Figur 7 verdeutlicht.

Gemäß Figur 6 wird auf die Werkzeugmaschinenspindel 1 über das Hauptgetriebe 4 eine Drehzahl übertragen. Hier ist das erste Zahnrad Z1 mit dem dritten Zahnrad Z3, welches drehfest auf der Hohlwelle 2 sitzt, und dem vierten Zahnrad Z4, welches ausgangsseitig am Rotor 5.1 des Hohlwellenmotors angeordnet ist, in Eingriff, wodurch die Hohlwelle 2 mit der Drehzahl des Rotors 5.1 des Hohlwellenmotors rotiert. Der Kraftfluss (dicke Linie) erfolgt über den Rotor 5.1, das Zahnrad Z4 über das Zahnrad Z1 auf das Zahnrad Z3 auf die Hohlwelle 2.

Gemäß Figur 7 wurde das erste Zahnrad Z1 axial verschoben, so dass dieses mit dem zweiten Zahnrad Z2, welches mit der Werkzeugmaschinenspindel 1 drehfest verbunden ist, und mit den dritten Zahnrad Z3, welches mit der Hohlwelle 2 drehfest verbunden ist, in Eingriff steht. Die Hohlwelle 2 weist damit eine Drehzahl auf, welche mit der Drehzahl, die auf die Werkzeugmaschinenspindel 1 über das Hauptgetriebe 4 übertragen wird, identisch ist. Das vierte Zahnrad Z4 ist außer Eingriff.

Der Kraftfluss (dicke Linie) erfolgt über das Hauptgetriebe 4 auf die Werkzeugmaschinenspindel 1 und das auf dieser drehfest angeordnete zweite Zahnrad Z2 auf das erste Zahnrad Z1 und von diesem über das dritte Zahnrad Z3 auf die Hohlwelle 2.

Die erfindungsgemäße Lösung ist mit Standardspindeln kombinierbar und nachrüstbar, so dass ein Kunde dies auch im Nachgang ordern kann.

Die Baugruppe zur Realisierung der Drehzahldifferenz zwischen Welle/Kühlmittelrohr 2 und Werkzeugmaschinenspindel 1, im Wesentlichen bestehend aus der Kupplungsbaugruppe mit dem Hohlwellenmotor 5 und dem Hydraulikmotor 7 (Axialantrieb für das erste Zahnrad Z1) kann dabei als Baugruppe einfach nachgerüstet werden, insbesondere wenn die Spindelbaugruppe S entsprechend vorbereitet ist. In diesem Fall sind bei der Spindelbaugruppe S die Werkzeugmaschinenspindel 1 und die Welle (Kühlmittelrohr) 2 miteinander verblockt aber die Welle/das Kühlmittelrohr in Form der Hohlwelle 2 bereits in der Werkzeugmaschinenspindel 1 relativ zu dieser drehbar gelagert. Ggf. kann die Werkzeugmaschinenspindel 1 bereits mit dem zweiten Zahnrad Z2 und die Drehwelle 2elle / das Kühlmittelrohr mit dem dritten Zahnrad Z3 vorgerüstet sein.

Ist keine Kühlung des Werkzeuges erforderlich, kann anstelle der als Kühlmittelrohr ausgeführten Hohlwelle 2 auch eine herkömmliche Welle oder Hohlwelle verwendet werden.

Zur möglichen Realisierung der Aussteuerfunktion eines Aussteuerwerkzeuges wird dann die Verblockung zwischen Werkzeugmaschinenspindel 1 und Welle 2 gelöst und die Baugruppe mit dem ersten Zahnrad Z1, dem zweiten Drehantrieb 5 (Hohlwellenmotor) mit dem ausgangsseitigen vierten Zahnrad Z4 sowie mit dem axialen Antrieb (hier Pneumatikzylinder 7) des ersten Zahnrades Z1 nachgerüstet.

Das Ein- und Ausschalten der Aussteuerfunktion wird vorzugsweise, wie vorgenannt bereits beschrieben, im Stillstand der Spindel vorgenommen. Grundsätzlich ist es aber auch möglich, Spindelantrieb und Verstellantrieb über ein entsprechendes (bekanntes) Getriebe zu synchronisieren. Dies wurde nicht durch ein Ausführungsbeispiel untersetzt.

### Bezugszeichenliste

- 1: Werkzeugmaschinenspindel
- 2: Welle
- 2.1: Durchströmöffnung
- 3: Antriebsmotor
- 4: Hauptgetriebe
- 5: Hohlwellenmotor
- 5.1: Rotor
- 5.2: Stator
- 5.3: Lagerung
- 6: Kupplungsbaugruppe
- 7: Pneumatikzylinder
- 7.1: Kolbenstange
- 7.2: Verbindungselement
- 7.3: Lagerring
- 7.4: Kugellagerung
- 8: Aussteuerkopf
- 8.1: Spanneinrichtung
- 9: Hülse
- 10: Adapter
- 11: Wälzlager
- A: Längsachse
- L: Kühlmittelanschluss
- S: Spindelbaugruppe
- Z1: erstes Zahnrad
- Z2: zweites Zahnrad
- Z3: drittes Zahnrad
- Z4: viertes Zahnrad

## Patentansprüche

1. Spindelbaugruppe (S) für eine Werkzeugmaschine mit einer Werkzeugmaschinenspindel (1), die mittels eines ersten Drehantriebes (3) in Rotation versetzbar ist und in welcher eine innen liegende relativ zur Werkzeugmaschinenspindel (1) drehbar gelagerte Welle (2) angeordnet ist,
wobei die Spindelbaugruppe (S) mit einer Kupplungsbaugruppe (6) kombiniert ist, die ein axial verschiebbar angeordnetes erstes Zahnrad (Z1) und einen zweiten Drehantrieb (5) aufweist,
- wobei das erste Zahnrad (Z1) in einer ersten Endlage die Werkzeugmaschinenspindel (1) mit der Welle (2) koppelt derart, dass die Werkzeugmaschinenspindel (1) und die Welle (2) mit der gleichen Drehzahl rotieren
und
- **dadurch gekennzeichnet, dass** das erste Zahnrad (Z1) in einer zweiten Endlage die Welle (2) mit dem zweiten Drehantrieb (5) koppelt, wobei durch den zweiten Drehantrieb (5) auf die Welle (2) eine Drehzahl übertragbar ist, die unterschiedlich ist zur Drehzahl der Werkzeugmaschinenspindel (1), so dass durch eine Differenzdrehzahl zwischen der Werkzeugmaschinenspindel (1) und der in dieser drehbar gelagerten Welle (2) ein in der Spindelbaugruppe (S) aufgenommenes aussteuerbares Werkzeug radial stellbar ist.

2. Spindelbaugruppe nach Anspruch 1, **dadurch gekennzeichnet, dass** diese
- ein mit der Werkzeugmaschinenspindel (1) drehfest verbundenes zweites Zahnrad (Z2)
- ein mit der drehbar gelagerten Welle (2) drehfest verbundenes drittes Zahnrad (Z3)
- ein am Drehmotor ausgangsseitiges viertes Zahnrad (Z4) aufweist
und dass in der ersten Endlage das erste Zahnrad (Z1) mit dem zweiten Zahnrad (Z2) und dem dritten Zahnrad (Z3) in Eingriff ist und dass in der zweiten Endlage das erste Zahnrad (Z1) mit dem dritten Zahnrad (Z3) und dem vierten Zahnrad (Z4) in Eingriff ist.

3. Spindelbaugruppe nach Anspruch 1 oder 2, **dadurch gekennzeichnet**, die Spindelbaugruppe (S) zur Realisierung der axialen Stellbewegung des ersten Zahnrades (Z1) mit einer Betätigungseinrichtung zur axialen Verschiebung des ersten Zahnrades (Z1) versehen ist.

4. Spindelbaugruppe nach einem der Ansprüche 1 bis 3, **dadurch gekennzeichnet, dass** die Betätigungseinrichtung des ersten Zahnrades (Z1) der Spindelbaugruppe (S) ein Pneumatikzylinder (7) oder ein Hydraulikzylinder oder ein elektrischer Antrieb ist.

5. Spindelbaugruppe nach Anspruch 1, **dadurch gekennzeichnet, dass** die axiale Verschiebung des ersten Zahnrades (Z1)
- im Stillstand der Werkzeugmaschinenspindel (1) erfolgt
oder
- dass der erste Drehantrieb (3) und der zweite Drehantrieb (5) synchronisiert sind derart, dass ein Ein- und Ausschalten der Differenzdrehzahl während der Rotation der Werkzeugmaschinenspindel (1) erfolgt.

6. Spindelbaugruppe nach einem der Ansprüche 1 bis 5, **dadurch gekennzeichnet, dass** die innerhalb der Werkzeugmaschinenspindel (1) angeordnete drehbar gelagerte Welle (2) als Kühlmittelrohr ausgebildet ist.

7. Spindelbaugruppe nach einem der Ansprüche 1 bis 6, **dadurch gekennzeichnet, dass** der zweite Drehantrieb (5) als Hohlwellenmotor ausgebildet ist.

8. Spindelbaugruppe nach einem der Ansprüche 1 bis 7, **dadurch gekennzeichnet, dass** die Kopplungsbaugruppe (6) nachrüstbar ist.

## Claims

1. Spindle assembly (S) for a machine tool having a machine tool spindle (1) which can be set in rotation by means of a first rotary drive (3) and in which an internally located shaft (2) rotatably mounted relative to the machine tool spindle (1) is arranged,
wherein the spindle assembly (S) is combined with a coupling assembly (6) which has an axially displaceably arranged first gearwheel (Z1) and a second rotary drive (5),
- wherein the first gearwheel (Z1) couples the machine tool spindle (1) to the shaft (2) in a first end position in such a way that the machine tool spindle (1) and the shaft (2) rotate at the same speed,
and
- **characterized in that** the first gearwheel (Z1) couples the shaft (2) to the second rotary drive (5) in a second end position, wherein a rotational speed can be transmitted by the second rotary drive (5) to the shaft (2) which is different from the rotational speed of the machine tool spindle (1), so that a tool which can be actuated and is accommodated in the spindle assembly (S) can be radially adjusted by a differential rotational speed between the machine tool spindle (1) and the shaft (2) rotatably mounted therein.

2. Spindle assembly according to claim 1, **characterized in that** it comprises
- a second gearwheel (Z2) connected in a rotationally fixed manner to the machine tool spindle (1),
- a third gearwheel (Z3) connected in a rotationally fixed manner to the rotatably mounted shaft (2),
- a fourth gearwheel (Z4) on the output side of the rotary motor,
and **in that**, in the first end position, the first gearwheel (Z1) is in meshing engagement with the second gearwheel (Z2) and the third gearwheel (Z3), and **in that**, in the second end position, the first gearwheel (Z1) is in meshing engagement with the third gearwheel (Z3) and the fourth gearwheel (Z4).

3. Spindle assembly according to claim 1 or 2, **characterized in that** the spindle assembly (S) is provided with an actuating device for axial displacement of the first gearwheel (Z1) in order to realize the axial actuating movement of the first gearwheel (Z1).

4. Spindle assembly according to one of claims 1 to 3, **characterized in that** the actuating device of the first gearwheel (Z1) of the spindle assembly (S) is a pneumatic cylinder (7) or a hydraulic cylinder or an electric drive.

5. Spindle assembly according to claim 1, **characterized in that** the axial displacement of the first gearwheel (Z1)
- takes place when the machine tool spindle (1) is at a standstill, or
- **in that** the first rotary drive (3) and the second rotary drive (5) are synchronized in such a way that the differential speed is switched on and off during the rotation of the machine tool spindle (1).

6. Spindle assembly according to one of claims 1 to 5, **characterized in that** the rotatably mounted shaft (2) arranged inside the machine tool spindle (1) is designed as a coolant tube.

7. Spindle assembly according to one of the claims 1 to 6, **characterized in that** the second rotary drive (5) is designed as a hollow-shaft motor.

8. Spindle assembly according to one of claims 1 to 7, **characterized in that** the coupling assembly (6) can be retrofitted.

## Revendications

1. Groupe de broche (S) pour une machine-outil avec une broche de machine-outil (1) qui peut être entraînée en rotation au moyen d'un premier entraînement rotatif (3) et dans laquelle est disposé un arbre (2) intérieur supporté avec possibilité de rotation par rapport à la broche de machine-outil (1), lequel groupe de broche (S) est combiné avec un groupe d'accouplement (6) qui présente une première roue dentée (Z1) disposée avec possibilité de translation axiale et un deuxième entraînement rotatif (5),
dans lequel la première roue dentée (Z1) est couplée avec un arbre (2) dans une première position de fin de course de la broche de machine-outil (1), de telle manière que la broche de machine-outil (1) et l'arbre (2) tournent à la même vitesse,
**caractérisé en ce que** la première roue dentée (Z1) couple l'arbre (2) avec le deuxième entraînement rotatif (5) dans une deuxième position de fin de course, le deuxième entraînement rotatif (5) pouvant transmettre à l'arbre (2) une vitesse de rotation différente de la vitesse de rotation de la broche de machine-outil (1), de sorte qu'une vitesse de rotation différentielle entre la broche de machine-outil (1) et l'arbre (2) supporté avec possibilité de rotation dans celle-ci permet d'ajuster un outil ajustable reçu dans le groupe de broche (S).

2. Groupe de broche selon la revendication 1, **caractérisé en ce qu'**il comporte
- une deuxième roue dentée (Z2) reliée de façon solidaire en rotation avec la broche de machine-outil (1),
- une troisième roue dentée (Z3) reliée de façon solidaire en rotation à un arbre (2) supporté avec possibilité de rotation,
- une quatrième roue dentée (Z4) du côté de la sortie du moteur rotatif
et **en ce que**, dans la première position de fin de course, la première roue dentée (Z1) est en prise avec la deuxième roue dentée (Z2) et avec la troisième roue dentée (Z3) et **en ce que**, dans la deuxième position de fin de course, la première roue dentée (Z1) est en prise avec la troisième roue dentée (Z3) et avec la quatrième roue dentée (Z4).

3. Groupe de broche selon la revendication 1 ou 2, **caractérisé en ce que** le groupe de broche (S) est muni, pour réaliser le mouvement d'ajustement axial de la première roue dentée (Z1), d'un dispositif d'actionnement pour la translation axiale de la première roue dentée (Z1).

4. Groupe de broche selon l'une des revendications 1 à 3, **caractérisé en ce que** le dispositif d'actionnement de la première roue dentée (Z1) du groupe de broche (S) est un vérin pneumatique (7) ou un vérin hydraulique ou un entraînement électrique.

5. Groupe de broche selon la revendication 1, **caractérisé en ce que** la translation axiale de la première roue dentée (Z1)
- s'effectue quand la broche de machine-outil (1) est immobilisée
ou
- **en ce que** le premier entraînement en rotation (3) et le deuxième entraînement en rotation (5) sont synchronisés de telle manière que la vitesse de rotation différentielle soit embrayée et débrayée pendant la rotation de la broche de machine-outil (1).

6. Groupe de broche selon l'une des revendications 1 à 5, **caractérisé en ce que** l'arbre (2) supporté avec possibilité de rotation à l'intérieur de la broche de machine-outil (1) est conformé comme un tuyau de liquide de refroidissement.

7. Groupe de broche selon l'une des revendications 1 à 6, **caractérisé en ce que** le deuxième entraînement en rotation (5) est conformé comme un moteur à arbre creux.

8. Groupe de broche selon l'une des revendications 1 à 7, **caractérisé en ce que** le groupe d'accouplement (6) peut être ajouté lors d'un rétrofit.
